# FASCICULE DE BREVET EUROPEEN

(11) **EP 2 671 796 B1**
(45) Date de publication et mention de la délivrance du brevet: **15.03.2017**
(21) Numéro de dépôt: 13002644.6
(22) Date de dépôt: 21.05.2013
(51) Int. Cl.: B64C 13/18, G05D 1/00

(54) **Procédé de commandes de vol automatisées pour giravion, procurant une tenue de trajectoire du giravion par suivi de commandes de vol manuelles**
Verfahren zur automatisierten Flugsteuerung für Drehflügelflugzeug, das eine Beibehaltung der Flugbahn des Drehflügelflugzeugs durch Nachverfolgung der manuellen Flugsteuerbefehle erzeugt
Method for automated flight controls for a rotorcraft, maintaining the trajectory of the rotorcraft by following manual flight controls

(30) Priorité: 06.06.2012 FR 1201620
(43) Date de publication de la demande: 11.12.2013
(73) Titulaire: Airbus Helicopters, 13725 Marignane Cedex (FR)
(72) Inventeur: Certain, Bernard, F-13090 AIX EN PROVENCE (FR)
(74) Mandataire: Pouillot, Laurent Pierre Paul

(56) Documents cités:
- FR-A- 1 347 243
- GB-A- 809 278
- US-A- 5 197 697
- US-A1- 2011 137 492

## Description

La présente invention est du domaine des giravions, et relève plus particulièrement des systèmes de commandes de vol automatisées influant sur le comportement en vol du giravion. Le système de commandes de vol automatisées pour giravion dont relève la présente invention, est un système automatisé d'assistance au pilote du giravion pour l'exécution de procédures délicates d'intervention sur le comportement en vol du giravion, notamment à basses vitesses, telles qu'inférieures à 50 noeuds environ.

Les giravions sont des appareils volants qui se distinguent principalement des autres aéronefs motorisés par leur capacité à évoluer aussi bien en vol de croisière à vitesses élevées, qu'en vol à basses vitesses ou en vol stationnaire. Une telle capacité est procurée par l'exploitation d'au moins un rotor principal à axe sensiblement vertical équipant le giravion.

Ce rotor principal comporte une voilure tournante procurant la sustentation voire aussi la propulsion du giravion. Le comportement du giravion en vol est modifié à partir d'une variation du pas cyclique ou collectif des pales de la voilure tournante. Une variation du pas cyclique des pales induit une modification du comportement du giravion en assiette, et plus particulièrement sélectivement en tangage et/ou en roulis. Une variation du pas collectif des pales induit une modification du comportement du giravion en sustentation, et plus particulièrement suivant l'axe de gravité.

Dans le cas où le rotor principal ne procure que la sustentation, sinon aussi une propulsion marginale tel que pour un hélicoptère hybride, le giravion est équipé de moyens de propulsion spécifiques. Par exemple les hélicoptères hybrides sont équipés d'un rotor principal procurant principalement la sustentation du giravion et à moindres mesures sa propulsion, et d'au moins une hélice propulsive.

Le giravion est aussi manoeuvrable en lacet sur lui-même, à partir de l'exploitation d'un dispositif anti-couple en lacet. Par exemple, un tel dispositif anti-couple est formé d'un rotor anti-couple à axe sensiblement horizontal au regard de l'axe sensiblement vertical du rotor principal. Le rotor anti-couple est par exemple un rotor de queue du giravion, ou par exemple encore dans le cas d'un hélicoptère hybride, est formé de l'une au moins des hélices propulsives équipant un tel hélicoptère hybride. Dans le cas d'exemple d'un rotor anti-couple, une variation du pas collectif des pales du rotor anti-couple induit une variation de progression du giravion en lacet.

La capacité spécifique d'un giravion à progresser en vol stationnaire ou à basses vitesses, implique une organisation particulière des moyens exploités pour gérer son comportement en vol. Les difficultés liées à une telle organisation particulière sont à considérer indépendamment de l'exploitation potentielle des dits moyens pour une progression du giravion à vitesses élevées.

Une variation du comportement en vol du giravion est réalisée à partir d'une modification de paramètres de vol du giravion, définis au regard des valeurs de pas cyclique et/ou collectif du rotor principal, et/ou des valeurs de pas collectif du rotor anti-couple. Une telle modification des paramètres de vol est susceptible d'être réalisée selon divers modes de commande.

Selon un mode manuel de commande, le pilote du giravion dispose d'organes manuels de commande entraînés par l'homme pour opérer une variation du pas des pales du ou des rotors par l'intermédiaire de chaînes cinématiques de commande manuelle respectivement affectées à chacun des axes de progression du giravion. La notion de manuelle est à considérer en opposition à la notion d'automatique, sans préjuger du moyen utilisé par l'homme pour manoeuvrer le giravion, palonnier, manette ou manche notamment.

Suivant une forme de réalisation d'un mode manuel de commande, les organes manuels de commande sont en prise sur des chaînes respectives à transmission mécanique distante d'efforts, permettant au pilote du giravion de manoeuvrer mécaniquement les pales à partir des organes manuels de commande, soit directement soit en fonction de la masse du giravion par l'intermédiaire de servocommandes.

Suivant une autre forme de réalisation d'un mode manuel de commande, un entraînement de l'organe manuel de commande par le pilote est générateur de signaux électriques d'activation d'au moins une servocommande de manoeuvre des pales.

Selon un mode automatisé de commande, un pilote automatique est générateur d'ordres automatisés de commande d'une manoeuvre des pales par l'intermédiaire de chaînes cinématiques de commande automatisée respectivement affectées à chacun des axes de progression du giravion. Lorsque le pilote automatique est activé, les ordres de commande automatisés se substituent aux ordres de commande générés par le pilote directement à partir des organes manuels de commande, pour activer les servocommandes.

Le pilote automatique permet de maintenir une progression stable du giravion selon une consigne préalablement mémorisée. Un état effectif de progression du giravion est évalué par le pilote automatique à un instant donné au regard de diverses informations fournies par l'instrumentation de bord du giravion. A partir d'une différence détectée par le pilote automatique entre la consigne et l'état effectif de progression du giravion, le pilote automatique intervient sur le comportement en vol du giravion pour rétablir son état effectif de progression conformément à la consigne.

L'activation du pilote automatique est commandée par le pilote du giravion à partir d'un ou de plusieurs boutons de commande spécifiques.

Selon un mode de stabilisation mis en oeuvre par le pilote automatique, une consigne initiale de tenue d'assiette du giravion est définie au regard de l'état de progression du giravion évalué à partir de l'activation du pilote automatique. Le mode de stabilisation procure une stabilisation du giravion par correction d'assiette du giravion au moyen du pilote automatique par rapport à la consigne initiale.

On pourra par exemple se reporter à ce propos au document FR 1 347 243 (BOEING CO), qui divulgue des modalités de stabilisation du comportement d'un giravion par un pilote automatique par tenue de consignes de vol préalablement mémorisées. Une détection d'un écart de trajectoire du giravion est génératrice de signaux d'erreurs, et des commandes de vol émises par le pilote automatique corrigent l'attitude du giravion jusqu'à l'obtention d'une valeur nulle des signaux d'erreur. Les commandes de vol sont émises par le pilote automatique pour l'un au moins des axes de progression du giravion en étant synchronisées entre elles pour l'ensemble des axes de progression, de sorte que le comportement du giravion est maintenu stable en cas d'une correction de position du giravion vis-à-vis d'un quelconque axe de progression.

Selon un mode particulier de pilotage par transparence, le pilote du giravion peut éventuellement intervenir temporairement sur le comportement du giravion par l'intermédiaire des chaînes cinématiques à commande manuelle, en surpassant les ordres de commande générés par le pilote automatique. La consigne initiale est figée, une éventuelle intervention temporaire du pilote sur le comportement du giravion n'induisant pas de modification de la consigne initiale.

Il est par ailleurs connu de corriger une consigne initiale de tenue d'assiette en fonction de l'état de progression effective du giravion évalué à l'issue d'un entraînement par le pilote des organes manuels de commande. Il est encore connu de permettre au pilote du giravion de corriger une consigne initiale de tenue d'assiette en faisant varier ses valeurs par incrémentation.

On pourra par exemple se reporter à ce propos au document GB 809 278 (BENDIX AVIAT CORP) qui décrit de telles modalités de correction de consignes de tenue d'assiette. Plus particulièrement, un pilote automatique maintien la position de gouvernes et d'ailerons de l'avion conformément à des consignes de vol procurant une progression stabilisée d'un avion en tangage, en roulis et en lacet. Un pilote humain peut intervenir sur la progression de l'avion par modification de la position des ailerons, tout en conservant une stabilisation par le pilote automatique du comportement de l'avion. En fin d'intervention du pilote humain et obtention d'une stabilisation de l'attitude de l'avion à l'altitude désirée, les consignes de vol sont conservées selon l'état courant de progression du giravion.

La stabilisation du giravion est procurée à partir de modes de base, selon lesquels le pilote automatique est par exemple générateur d'une augmentation de stabilité par amortissement des mouvements angulaires du giravion, ou par exemple encore de tenue d'assiettes ou de cap, voire encore de découplage d'axes de progression. Les modes de base procurent un confort de pilotage pour le pilote du giravion, mais ne corrigent pas d'éventuels écarts de position du giravion. Il a donc été proposé d'associer aux modes de base des modes supérieurs de fonctionnement, pour annuler d'éventuels écarts de position, de vitesse et/ou d'accélération du giravion. Le comportement du giravion est géré par le pilote automatique en fonction de la consigne de vol, pour maintenir le giravion stable et pour rétablir sa position, sa vitesse ou son accélération à partir des modes supérieurs. L'opération de stabilisation du giravion procurée par les modes de base est effectuée rapidement par le pilote automatique, tandis que l'opération de rétablissement de la position, de la vitesse et/ou de l'accélération du giravion est ensuite effectuée plus lentement par les modes supérieurs.

Le pilote automatique est encore susceptible de procurer des fonctions avancées d'assistance au guidage du giravion. Les potentialités offertes par les modes supérieurs sont accessoirement exploitées pour procurer une telle assistance. Diverses fonctions avancées sont susceptibles d'être exploitées pour procurer une assistance au guidage du giravion. Les modalités, d'exécution des fonctions avancées relèvent de fonctionnalités prédéfinies du pilote automatique, au regard d'une trajectoire que doit suivre le giravion.

Selon diverses fonctions avancées du pilote automatique exploitant les modes supérieurs, le giravion est guidé par le pilote automatique au regard d'une trajectoire de consigne préalablement définie. Le pilote automatique est susceptible d'exploiter divers moyens de géolocalisation pour guider le giravion selon une trajectoire de consigne.

La trajectoire de consigne est par exemple exploitée au regard d'une mission de vol préalablement déterminée par le pilote du giravion, ou encore est exploitée en phase d'approche d'un site connu et repéré. Un tel site est notamment équipé de moyens procurant une interactivité entre le site et le pilote automatique, tels que des balises de radionavigation. En l'absence de tels équipements interactifs, le repérage du site est effectué par le pilote du giravion en mode manuel, puis le pilote du giravion active la fonction avancée souhaitée.

Pour de telles fonctions avancées exploitant les modes supérieurs du pilote automatique, il est mis en oeuvre deux boucles superposées d'asservissement des paramètres de vol. Une boucle d'asservissement rapide est affectée à la correction d'assiette, en lacet ou en verticalité du giravion. Une boucle d'asservissement lent est affectée à l'annulation d'un éventuel écart de guidage du giravion par les modes supérieurs.

Le pilote automatique est traditionnellement en relation avec des moyens d'affichage qui fournissent au pilote du giravion diverses informations, telles que par exemple des informations relatives à divers paramètres de vol, à la mission de vol à effectuer par le giravion, aux conditions climatiques et/ou relatives à l'environnement extérieur du giravion, voire encore à l'environnement du site d'intervention. De telles informations sont utiles à la manoeuvre du giravion par le pilote automatique et/ou par le pilote du giravion.

On pourra par exemple de reporter à ce propos au document US 2011/137492 (SAHASRABUDHE VINEET et al.), qui divulgue des modalités de guidage sur trajectoire automatisé d'un giravion exploitant de dites fonctions avancées (fonction VTOL d'après l'acronyme anglais Vertical Take Off and Landing). Le guidage du giravion est opéré en vol aux instruments en prenant en compte un état effectif de progression du giravion et un état à atteindre de progression du giravion procurant son guidage le long d'une trajectoire d'approche prédéfinie. Le pilote humain dispose de moyens d'affichage d'informations relatives au guidage sur trajectoire du giravion par rapport à son environnement extérieur.

Les modalités de fonctionnement du pilote automatique permettent une assistance automatisée satisfaisante du pilotage en correction d'assiette du giravion en phase de vol de croisière, à vitesses élevées et à une position du giravion éloignée du sol. En phase de vol de croisière, l'environnement du giravion est normalement dégagé, et le pilote du giravion est dispensé d'une intervention soutenue sur la manoeuvre du giravion. Une telle dispense d'intervention soutenue est aussi susceptible d'être procurée à proximité du sol en environnement connu par la mise en oeuvre d'une fonction avancée du pilote automatique, tel que pour une phase d'approche d'une piste d'atterrissage connue et/ou équipée de moyens de repérage de son environnement.

Une assistance automatisée procurée par le pilote automatique en fonction avancée est susceptible d'être satisfaisante en phase d'approche d'un site d'intervention, y compris à basses vitesses, dès lors que ce site d'intervention est parfaitement connu, identifié et repéré par le pilote automatique. Le site d'intervention étant repéré, l'activation d'une fonction avancée est rendue possible pour guider le giravion suivant la trajectoire de consigne correspondante.

D'une manière générale, les giravions sont des aéronefs motorisés prévus pour pouvoir évoluer dans des conditions de vol difficiles, telles qu'à basses vitesses ou en vol stationnaire, proches d'un quelconque sol inconnu ou mal connu, avec de quelconques conditions de visibilité et/ou en environnement hostile et/ou inconnu.

Dans des conditions de vol difficiles, des facteurs inattendus sont susceptibles de devoir être pris en compte par le pilote du giravion. L'exploitation par le pilote du giravion d'une assistance automatisée à la manoeuvre du giravion dans de telles conditions de vol difficiles est délicate, voire impossible. Par exemple lorsque le giravion est proche du sol, une éventuelle modification de son comportement doit être rapidement opérée. Les modalités de fonctionnement du pilote automatique ne permettent que difficilement une modification rapide d'une trajectoire à suivre par le giravion au moyen de l'exploitation d'une fonction avancée mettant en oeuvre les modes supérieurs.

Ainsi, une zone de posé est susceptible d'être mal connue lors de l'élaboration par le pilote du giravion de la mission de vol. Les conditions d'accès à la zone de posé peuvent être initialement repérées en étant potentiellement difficiles, voire inconnues et/ou hostiles. L'accès à la zone de posé peut aussi être rendu inopinément difficile, l'environnement réel du site pouvant être différent et/ou temporairement modifié par rapport à celui supposé connu et attendu par le pilote du giravion. La localisation préalable de la zone de posé par les moyens de géolocalisation est susceptible d'être approximative, voire d'être incertaine. Une mauvaise visibilité ne facilite pas pour le pilote du giravion une identification rapide sur site des difficultés à surmonter pour approcher la zone de posé.

Dans ces conditions, un sentiment de confusion peut naître chez le pilote du giravion au regard du choix des modes de commande automatisé ou manuel à exploiter pour approcher une zone de posé en situation de vol difficile. Il est alors révélé le besoin pour le pilote du giravion, de disposer des avantages procurés par un pilotage assisté au moyen du pilote automatique, tout en conservant la faculté d'intervenir rapidement en mode manuel sur le comportement du giravion.

Il est souhaitable d'éviter pour le pilote du giravion un tel sentiment de confusion en phase d'approche difficile d'un site d'intervention, en confortant les modalités d'exploitation du pilote automatique permettant d'intervenir rapidement sur le comportement du giravion.

Le but de la présente invention est de proposer un procédé de mise en oeuvre d'un système de commandes de vol automatisées pour giravion permettant de soulager un pilote de giravion d'un tel sentiment de confusion en phase d'approche difficile d'un site d'intervention.

Le procédé de la présente invention est un procédé de mise en oeuvre d'un système automatisé de commande de vol pour giravion. Le dit système automatisé comprend un pilote automatique générateur d'ordres de commande selon des modes prédéfinis de fonctionnement. Les ordres de commande provoquent une modification du comportement du giravion suivant l'un au moins des axes de progression du giravion comprenant au moins le tangage, le roulis, la verticalité et le lacet, voire l'horizontalité pour un hélicoptère hybride à hélices propulsives. Il est communément admis par axes de progression les axes de commande à partir duquel la progression en vol du giravion est pilotée, indifféremment par le pilote du giravion et/ou par le pilote automatique. A partir d'une commande opérée suivant les dits axes de progression, le comportement du giravion est modifié par rapport à ses six axes de liberté dans le repère terrestre.

Le dit système de commande automatisé est couramment en relation avec une instrumentation de bord du giravion, ce qui permet d'évaluer l'état courant de progression du giravion à un instant donné. A partir d'une telle évaluation, le pilote automatique est avantageusement apte à agir sur le comportement en vol du giravion à partir de consignes de vol préalablement mémorisées.

Selon la présente invention, le procédé est principalement reconnaissable en ce que le pilote automatique intègre une fonction de tenue de trajectoire du giravion. Ladite fonction de tenue de trajectoire comprend au moins un mode de guidage du giravion par le pilote automatique suivant l'un au moins des dits axes de progression du giravion.

Plus particulièrement selon des modalités essentielles de mise en oeuvre de la fonction de tenue de trajectoire, une requête d'acquisition d'au moins une consigne de trajectoire définie par au moins un paramètre de vol est émise par l'homme. Ladite consigne de trajectoire est relative au dit au moins mode de guidage. Puis, en conséquence d'un entraînement par l'homme d'au moins un organe manuel de commande provoquant une modification du comportement du giravion suivant l'un quelconque au moins des dits axes de progression, le pilote automatique est générateur :
*) d'un ordre d'inhibition par le pilote automatique du dit au moins mode de guidage du giravion pour lequel la dite requête d'acquisition d'une consigne de trajectoire a été émise, et relatif au dit au moins axe de progression à partir duquel le comportement du giravion est modifié par l'homme,
*) d'un ordre d'acquisition par le pilote automatique de la valeur du dit au moins paramètre de vol relevant de ladite consigne de trajectoire à acquérir, et relatif au dit au moins axe de progression à partir duquel le comportement du giravion est modifié par l'homme, ladite valeur étant évaluée sous condition d'une interruption du dit entraînement de l'organe manuel de commande. La dite valeur est isolément substituée à la valeur du au moins dit paramètre de vol acquise par le pilote automatique préalablement à l'ordre d'inhibition.

Il est à considérer que le dit ordre d'acquisition est afférent au dit au moins paramètre de vol relevant de ladite consigne de trajectoire à acquérir. Sous l'effet de ladite interruption de l'entraînement par l'homme de l'organe manuel de commande, les consignes de trajectoire afférentes aux autres modes de guidage du giravion maintenus engagés suivant les autres dits axes de progression, sont conservées en l'état préalable au dit entraînement par l'homme du dit au moins organe manuel de commande.

Les ordres de commande générés par le pilote automatique afférents à l'ensemble des axes de progression maintenus engagés sont adaptés par le pilote automatique selon l'état courant de progression du giravion, sur le fondement des dites consignes de trajectoire conservées et de ladite valeur substituée du dit au moins paramètre de vol pour lequel ladite requête d'acquisition a été émise.

La valeur du dit paramètre de vol afférent à la consigne de trajectoire à acquérir est notamment évaluée selon l'état effectif de progression du giravion déterminé à partir de l'instrumentation de bord du giravion. La valeur du dit paramètre de vol afférent à la consigne de trajectoire à acquérir est évaluée à l'interruption de l'entraînement par l'homme de l'organe manuel de commande ayant généré une modification du comportement du giravion au regard de la consigne de trajectoire dont la requête d'acquisition a été émise par l'homme.

On relèvera qu'une acquisition par le pilote automatique de la valeur d'un quelconque paramètre de vol, est potentiellement effectuée préalablement à l'ordre d'inhibition par l'intermédiaire d'un quelconque moyen d'acquisition, tel qu'un moyen couramment utilisé dans le domaine des giravions. En d'autres termes, le mode d'acquisition de la valeur initiale d'un paramètre de vol préalablement à l'ordre d'inhibition, est indifférent au regard du mode d'acquisition de la valeur de ce paramètre de vol selon les modalités mise en oeuvre spécifiquement par la fonction de tenue de trajectoire de la présente invention.

La notion de « autre » est à considérer au regard du guidage du giravion, par distinction entre l'ensemble des dits axes de progression du giravion et l'exclusion faite de cet ensemble du dit au moins axe de progression du giravion relatif au mode de guidage ayant fait l'objet du dit ordre d'inhibition. Les dits autres modes de guidage sont maintenus engagés, et sont à considérer comme étant des modes de guidage pour lesquels ladite requête d'acquisition n'a pas été génératrice d'un dit ordre d'inhibition.

Il est à distinguer un mode de base du pilote automatique procurant une stabilisation du giravion, voire encore un découplage des axes de progression du giravion, et un dit mode de guidage du giravion. Un tel mode de base est susceptible d'être mis en oeuvre ou d'être inhibé conjointement avec l'émission de l'ordre d'inhibition du dit au moins mode de guidage du giravion.

Plus particulièrement selon une forme de mise en oeuvre du procédé, l'ordre d'inhibition du dit au moins mode de guidage du giravion est de préférence associé à un ordre de maintien d'un mode de base du pilote automatique procurant une stabilisation par amortissement en assiette du giravion.

La requête d'acquisition de la consigne de trajectoire comprend notamment une opération de sélection par l'homme d'au moins un dit mode de guidage. Une telle opération de sélection est opérée par l'homme au moyen d'un organe de commande à choix multiples. A partir d'un tel organe de commande à choix multiple, l'homme sélectionne au moins un dit mode de guidage parmi l'un quelconque au moins d'une pluralité de modes de guidage. De tels modes de guidage en pluralité sont avantageusement respectivement au moins relatifs :
-) à une tenue de vitesse de progression du giravion en assiettes. Un tel mode de guidage est de préférence associé au dit ordre de maintien d'un mode de stabilisation du giravion par le pilote automatique.
-) à une tenue de vitesse de progression du giravion en verticalité,
-) à une tenue de position en vol stationnaire,
-) à une tenue de vitesse de progression du giravion en lacet,
-) à une tenue d'orientation du giravion par rapport à un cap,
-) à une tenue de pente du giravion,
-) à une tenue d'accélération du giravion par rapport aux axes du géographique local,
-) à une tenue d'accélération du giravion par rapport aux axes de progression du giravion,
-) à une tenue de virage coordonné par le giravion,
-) à une tenue de position du giravion vis-à-vis d'un dérapage,
-) à une tenue de vitesse air par le giravion,
-) à une tenue d'incidence par le giravion (1),
-) à une tenue d'altitude par le giravion (1),
-) à une tenue de hauteur par le giravion (1),
-) à une tenue de vitesse sur trajectoire tenue par le giravion, ou par analogie la vitesse sol.

La vitesse de progression en verticalité acquise par le pilote automatique est susceptible d'être nulle, pour maintenir le centre de gravité du giravion en position verticale, indifféremment en altitude ou en hauteur. Une telle vitesse de progression nulle en verticalité peut éventuellement correspondre à un maintien du giravion en vol stationnaire.

La progression du giravion en verticalité est susceptible de correspondre indifféremment à un éloignement ou à un rapprochement du giravion par rapport à une zone de posé. Un tel mode de guidage correspond notamment à l'acquisition par le pilote automatique d'une consigne de trajectoire fondée sur un maintien d'une position ou d'une variation de position en verticalité du giravion, pour assister le pilote du giravion selon une fonction de tenue de trajectoire relative à une tenue de pente. Un tel maintien de position ou de variation de position est notamment réalisé à partir d'une acquisition d'une valeur de pas collectif des pales du rotor principal et d'une éventuelle adaptation des valeurs courantes du pas cyclique des pales d'un rotor principal du giravion en tangage et/ou en roulis, et du pas collectif des pales d'un rotor anti-couple ou de valeurs analogues relatives à la mise en oeuvre d'un quelconque dispositif anti-couple.

La tenue d'orientation du giravion par rapport à un cap est notamment opérée au regard indifféremment du nord cartographique ou du nord magnétique. Un tel mode de guidage correspond notamment à l'acquisition par le pilote automatique d'une consigne de trajectoire fondée sur un maintien de l'orientation du giravion en lacet, tel qu'à partir de l'acquisition d'une valeur de pas collectif du rotor anti-couple ou analogue, et d'une adaptation par le pilote automatique des valeurs courantes du pas cyclique et du pas collectif des pales du rotor principal.

Il est à considérer que selon une généralité de la présente invention, le mode de guidage relatif à une tenue d'orientation du giravion par rapport à l'axe de lacet est susceptible d'être réalisée à partir d'un quelconque dispositif anti-couple, tel que par exemple au moyen d'un rotor anti-couple, rotor de queue ou hélice propulsive d'un hélicoptère hybride notamment, d'un dispositif à propulsion d'air ou tout autre dispositif anti-couple analogue. Les dispositions décrites relatives à l'utilisation d'un dit rotor de queue sont le cas échéant transposées au regard des modalités de fonctionnement propres d'un quelconque autre dispositif anti-couple de structure différente qui serait exploité.

Le mode de guidage de tenue de pente du giravion est indifféremment une tenue en pente sol ou en pente air. Un tel mode de guidage correspond par exemple à l'acquisition par le pilote automatique d'une consigne de trajectoire fondée sur un maintien en inclinaison du giravion, indifféremment en tangage et/ou en roulis, et une variation de position en verticalité du giravion. De telles dispositions provoquent avantageusement une assistance au pilotage suivant un rapprochement ou inversement un éloignement du giravion par rapport à une zone de posé prédéfinie, pour une orientation en assiettes du giravion donnée. Un tel maintien en inclinaison du giravion est potentiellement obtenu à partir de l'acquisition de valeurs du pas cyclique des pales du rotor principal indifféremment en tangage et/ou en roulis, d'une adaptation de la valeur courante du pas collectif du rotor anti-couple, et indifféremment une adaptation de la valeur courante ou une acquisition de la valeur du pas collectif des pales du rotor principal.

La tenue d'accélération du giravion est à considérer comme étant indifféremment positive ou négative. Une tel mode de guidage correspond notamment à l'acquisition par le pilote automatique d'une consigne de trajectoire fondée sur un maintien d'une direction de progression du giravion définie au regard des axes de tangage, de roulis, de lacet et de verticalité, en prenant en compte une variation de vitesse du giravion suivant l'un quelconque au moins de ces axes de progression.

Selon l'axe au moins de progression du giravion pris en considération à partir de l'entraînement de l'organe manuel de commande correspondant, une telle variation de vitesse du giravion est par exemple obtenue à partir d'une acquisition de valeurs d'une variation continue du pas des pales du rotor principal, indifféremment variation de pas cyclique et/ou variation de pas collectif. Par exemple encore, ladite variation de vitesse est susceptible d'être procurée à partir d'une variation continue de pas collectif des pales du rotor anti-couple. Les valeurs courantes du pas des pales respectivement relatives à un ou plusieurs des axes de progression du giravion n'ayant pas fait l'objet d'un entraînement par l'homme de l'organe manuel correspondant sont adaptées.

D'une manière générale, l'acquisition par le pilote automatique de la dite consigne de trajectoire relative au dit ordre d'acquisition, est notamment une acquisition :
-) soit d'un paramètre de vol relatif à une variation de pas collectif des pales d'un rotor principal du giravion, indifféremment selon une valeur constante ou selon une variation de valeur à maintenir. La valeur d'un paramètre de vol relatif à une variation de pas cyclique du rotor principal et la valeur d'un paramètre de vol relatif à une variation de pas collectif d'un rotor anti-couple du giravion étant inchangées.
-) soit d'un paramètre de vol relatif à une variation de pas cyclique des pales du rotor principal, indifféremment selon une valeur constante ou selon une variation de valeur à maintenir. La valeur d'un paramètre de vol relatif à une variation de pas collectif des pales du rotor principal et la valeur d'un paramètre de vol relatif à une variation de pas collectif du rotor anti-couple étant inchangées.
-) soit de l'un et de l'autre des dits paramètres de vol relatifs respectivement à une variation de pas collectif à une variation de pas cyclique des pales du rotor principal, indifféremment selon des valeurs constantes ou selon des variations de valeur à maintenir respectives. La valeur d'un paramètre de vol relatif à une variation de pas collectif des pales du rotor anti-couple est inchangée.
-) soit d'un paramètre de vol relatif à une variation de pas collectif des pales du rotor anti-couple, indifféremment selon une valeur constante ou selon une variation de valeur à maintenir. La valeur d'un paramètre de vol relatif à une variation de pas cyclique du rotor principal et la valeur d'un paramètre de vol relatif à une variation de pas collectif du rotor principal étant inchangées.

La valeur du dit au moins paramètre de vol est évaluée selon l'état effectif de progression du giravion déterminé par une instrumentation de bord du giravion. Une telle instrumentation de bord comprend une pluralité de moyens de mesure dont les giravions sont couramment équipés. A titre indicatif et selon une énumération non exhaustive, de tels moyens de mesure comprennent :
-) des moyens de détermination d'une vitesse de progression du giravion suivant l'un quelconque au moins des axes de progression du giravion. La vitesse de progression du giravion prise en compte est indifféremment une vitesse verticale, une vitesse air, une vitesse indiquée et/ou une vitesse sol.
-) des moyens de détermination d'une pente du giravion,
-) des moyens de mesure barométrique de l'altitude du giravion,
-) des moyens de mesure par radiosonde de la hauteur du giravion,
-) des moyens d'évaluation d'un écart de trajectoire horizontale du giravion par rapport à une consigne de trajectoire préalablement acquise par le pilote automatique. La trajectoire horizontale du giravion est notamment définie conjointement au regard de l'axe de tangage et de l'axe de roulis.
-) des moyens d'évaluation d'un écart de trajectoire verticale du giravion,
-) des moyens de détermination de la progression du giravion par radionavigation,
-) des moyens de capture inertiels indifféremment en accélération et/ou en vitesse angulaire du giravion.

L'exécution de la fonction de tenue de trajectoire est de préférence associée à une opération de visualisation sur un organe d'affichage de diverses données. Les données affichées sont choisies adaptées pour permettre au pilote d'exploiter dans les meilleures conditions possibles la fonction de tenue de trajectoire, particulièrement en environnement hostile, incertain ou méconnu.

Plus particulièrement, les données affichées comprennent notamment au moins l'environnement extérieur du giravion, une maquette figurative du giravion, une figuration d'une zone de posé du giravion évoluant par rapport à cette zone de posé, indifféremment en approche ou inversement en éloignement, et les illustrations suivantes au regard du dit environnement extérieur :
-) une illustration d'une variation d'orientation du giravion par rapport à une ligne d'horizon,
-) une illustration d'une variation d'orientation et de position du giravion par rapport à la zone de posé figurée,
-) au moins une illustration d'informations prédictives de la position et de l'orientation du giravion par rapport à la zone de posé figurée. Les dites informations prédictives sont notamment issues d'une projection de l'évolution de la position et de l'orientation du giravion à partir d'au moins une consigne de trajectoire courante.

L'opération d'affichage est potentiellement réalisée indifféremment au moyen d'un viseur tête haute, d'un viseur tête moyenne ou d'un viseur tête basse.

La visualisation de l'environnement extérieur du giravion est de préférence une représentation du monde extérieur au giravion en images à trois dimensions.

L'illustration d'une variation d'orientation du giravion par rapport à la ligne d'horizon, est préférentiellement choisie comme étant une animation de la maquette du giravion inclinée en assiette latérale par rapport à la ligne d'horizon figurée fixe horizontalement et mobile verticalement.

Selon une forme préférée de réalisation, la mise en oeuvre de la fonction de tenue de trajectoire est placée sous la dépendance d'une opération d'évaluation de la pertinence d'un entraînement du au moins dit organe manuel de commande. Ladite opération d'évaluation est une opération de détermination par calcul de la pertinence d'un entraînement du au moins dit organe manuel de commande, à partir d'un traitement par calcul d'un signal de détection d'un tel entraînement.

Plus particulièrement, le traitement par calcul du signal de détection comprend une opération de lissage dans le temps du signal de détection. A partir du signal de détection lissé, il est mis en oeuvre une opération de détermination de l'énergie développée pour générer l'entraînement de l'organe manuel de commande. Puis, il est mis en oeuvre une opération de comparaison de ladite énergie développée préalablement déterminée, avec un seuil prédéfini considéré comme significatif d'un entraînement volontaire par l'homme de l'organe manuel de commande.

De préférence, le procédé met en oeuvre préalablement à la dite comparaison une opération subsidiaire de conversion d'un signal analogique d'identification de ladite énergie développée, en un signal logique de l'énergie moyenne développée.

Des exemples de réalisation de la présente invention vont être décrits en relation avec les figures des planches annexées, dans lesquelles :
- la fig.1 est un schéma illustrant un exemple de mise en oeuvre d'un pilote automatique conformément à un procédé de la présente invention.
- la fig.2 est une illustration schématique de moyens de visualisation associés au pilote automatique représenté sur la fig.1, procurant une assistance au pilote d'un giravion mettant en oeuvre un procédé de la présente invention.
- la fig.3 est un schéma illustrant un exemple d'une opération d'évaluation de la pertinence d'un entraînement d'un organe manuel de commande exploité par l'homme pour mettre en oeuvre un procédé de la présente invention.

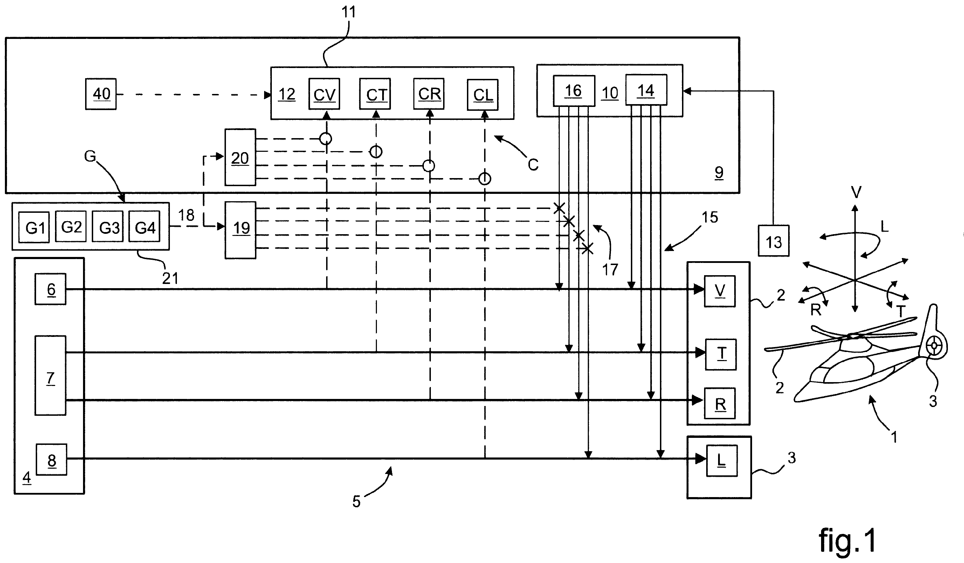

Sur la fig.1, un giravion 1 est un aéronef muni de rotors 2,3 pour évoluer suivant six degrés de liberté au regard du repère géographique local, à partir de quatre axes de progression pris en considération pour commander son pilotage. Ces axes de progression comprennent le tangage T, le roulis R, le lacet L et la verticalité V. Sur l'exemple de réalisation illustré, un rotor principal 2 procure la sustentation et la propulsion du giravion 1, et un rotor de queue 3 procure un guidage du giravion en lacet.

Le giravion 1 est équipé d'organes manuels de commande 4 pour modifier le comportement en vol du giravion 1 par l'intermédiaire de chaînes cinématiques à commande manuelle 5. Les organes manuels de commande 4 sont entraînés par l'homme, pilote du giravion notamment, et comprennent notamment un manche collectif 6 affecté à une variation de pas collectif des pales du rotor principal 2, une manette cyclique 7 affectée à une variation de pas cyclique des pales du rotor principal 2 et un palonnier 8 affecté à une variation de pas collectif des pales du rotor de queue 3. Un entraînement par l'homme du manche collectif 6 permet de modifier le comportement du giravion 1 en verticalité V. Un entraînement par l'homme de la manette cyclique 7 permet de modifier le comportement du giravion 1 en assiette T,R. Un entraînement par l'homme du palonnier 8 permet de modifier le comportement du giravion 1 en lacet L.

Le giravion 1 est aussi équipé d'un pilote automatique 9 procurant pour le pilote du giravion 1 une assistance au pilotage par l'intermédiaire de chaînes cinématiques à commande automatisée 10. Traditionnellement, le pilote automatique 9 génère des ordres de commande selon des consignes de vol 11 préalablement mémorisées, pour stabiliser le giravion 1 sur le fondement de ces consignes de vol 11. Le pilote automatique comporte des moyens de mémoire 12 des consignes de vol 11 suivant chacun des axes de progression T, R, V, L du giravion 1.

Un éventuel défaut de tenue d'une progression du giravion 1 au regard des consignes de vol 11 est détecté par le pilote automatique 9 à partir d'une comparaison entre les consignes de vol 11 préalablement mémorisées et un état effectif de progression du giravion 1 évalué au moyen d'une l'instrumentation de bord 13 du giravion 1.

A partir des consignes de vol 11, le pilote automatique 9 génère des ordres de commande qui mettent en oeuvre deux boucles superposées d'asservissement des paramètres de vol du giravion 1. Selon un mode de stabilisation 14, des boucles d'asservissement rapide 15 sont affectées à la correction d'assiette du giravion 1. Selon des modes supérieurs 16, des boucles d'asservissement lent 17 sont affectées à une correction de position, de vitesse et/ou d'accélération du giravion 1 consécutivement à une correction d'assiette du giravion 1. Les dites boucles d'asservissement lent 15 et rapide 17, permettent de faire varier les paramètres de vol du giravion 1 suivant chacun des axes de progression T, R, V, L du giravion 1.

Il est proposé par la présente invention d'exploiter les modes supérieurs 16 traditionnellement utilisés pour corriger la position, la vitesse et/ou l'accélération du giravion 1, afin d'assister le pilote du giravion 1 dans la tenue d'une trajectoire souhaitée sélectivement suivant l'un quelconque au moins des axes de progression T, R, V, L du giravion.

Selon une approche de la présente invention, une telle assistance prend en compte une sélection par le pilote du giravion d'une requête d'assistance au pilotage selon au moins un mode de guidage G (G1, G2, G3, G4, ou davantage) prédéterminé. La dite requête d'assistance est plus spécifiquement une requête d'acquisition 18 d'une consigne de trajectoire. L'assistance procurée au pilote du giravion prend aussi en compte un entraînement par l'homme de l'un au moins des organes manuels de commande 4 pour :
-) inhiber 19 l'action du pilote automatique 9 suivant le ou les modes supérieurs 16 relevant du ou des axes de progression T, R, V, L du giravion 1 sur lequel intervient le pilote du giravion 1. Le ou les dits modes supérieurs 16 relèvent d'un dit mode de guidage G préalablement sélectionné.
-) substituer 20 à une consigne de trajectoire C initiale (CV pour consigne de trajectoire en verticalité V, CT pour consigne de trajectoire en tangage T, CR pour consigne de trajectoire en roulis R, CL pour consigne de trajectoire en lacet L) relevant du dit mode de guidage G sélectionné et relevant de l'entraînement par le pilote du giravion de l'organe manuel de commande 4, une consigne de trajectoire C correspondante à l'état effectif de progression du giravion 1 évalué sous l'effet d'une interruption de l'entraînement de l'organe manuel de commande 4 par le pilote du giravion 1.

Les consignes de vol 11 relatives aux axes de progression T, R, V, L du giravion 1 différents de ceux T, R, V, L relevant du mode de guidage G préalablement sélectionné, sont inchangées. Les ordres de commande générés par le pilote automatique 9 afférents à l'ensemble des axes de progression T, R, V, L maintenus engagés sont adaptés par le pilote automatique 9 selon l'état courant de progression du giravion 1. Il est à considérer que les dits axes de progression T, R, V, L maintenus engagés sont ceux dont relèvent les modes supérieurs 16 qui sont propres à un mode de guidage G n'ayant pas fait l'objet d'une dite sélection préalable par le pilote du giravion 1, et en conséquence pour lesquels axes de progression T, R, V, L maintenus engagés ladite opération d'inhibition est sans effet. L'adaptation des ordres de commande est opérée par le pilote automatique 9 sur le fondement des dites consignes de vol 11 inchangées et de la consigne de trajectoire C ayant fait l'objet de la requête d'acquisition 20.

De telles dispositions sont particulièrement utiles lorsque le giravion 1 aborde une zone de posé en situation délicate. Le pilote du giravion 1 dispose d'une double fonctionnalité des modes supérieurs 16 pour l'assister selon ses besoins dans le pilotage du giravion 1, dont notamment un besoin courant et traditionnel, et un besoin en situation de vol délicate.

Selon un besoin d'assistance courant, le pilote du giravion 1 peut être assisté en vol par les modes supérieurs 16 en mode traditionnel de stabilisation du giravion 1. Un tel besoin d'assistance courant est susceptible d'être exploité dans une situation de vol dégagée, éloignée d'obstacles éventuels, tel qu'en situation de vol de croisière voire encore en situation d'approche confortable. Une telle situation d'approche confortable relève par exemple d'une zone d'approche connue et clairement identifiée ne présentant pas de difficultés particulières de pilotage du giravion, voire disposant d'un équipement au sol d'assistance au guidage du giravion 1.

Selon un besoin en situation de vol délicate, le pilote du giravion 1 peut être assisté en vol par les modes supérieurs 16, notamment en phase d'approche difficile d'une zone de posée méconnue et/ou sous conditions météorologiques difficiles, voire encore en environnement hostile. En situation de vol délicate, le pilote du giravion 1 peut changer sélectivement une ou plusieurs consignes de vol 11 au regard d'un mode de guidage G sélectionné par le pilote du giravion 1, à partir d'un entraînement de l'un quelconque au moins des organes manuels de commande 4. Les autres consignes de vol 11 afférentes aux modes de guidage G non sélectionnés sont inchangées et conservées. Les valeurs des paramètres de vol afférents à ladite consigne de vol 11 changée sont mémorisées par le pilote automatique sous l'effet d'une interruption par le pilote du giravion 1 du dit au moins organe manuel de commande 4, les ordres de commande relatifs aux autres paramètres de vol étant adaptées en correspondance par le pilote automatique 9.

Selon des variantes respectives de réalisation de la présente invention, une dite requête d'assistance au pilotage émise par le pilote du giravion 1 conformément à l'application d'une fonction de tenue de trajectoire de la présente invention, interrompt ou non le maintien par le pilote automatique 9 d'un mode de base de fonctionnement du pilote automatique 9 procurant une stabilité du giravion 1 par amortissement des variations d'assiettes au moyen des dites boucles d'asservissement rapide 15.

Plus particulièrement, le pilote du giravion 1 dispose d'un organe à choix multiple 21 pour activer la fonction de tenue de trajectoire, à partir de la sélection d'au moins un mode de guidage G du giravion 1. Le mode de guidage G sélectionné est un mode de guidage G pour lequel le pilote du giravion 1 souhaite pouvoir librement intervenir sans être confronté à une potentielle intervention du ou des modes supérieurs 16 afférents à ce mode de guidage G.

En outre, sous l'effet d'une interruption de l'intervention du pilote du giravion 1 sur le comportement du giravion 1, au moins une consigne de trajectoire C relevant du mode de guidage G sélectionné est prise en compte par le pilote automatique 9 conformément à l'état effectif de progression du giravion 1 évalué par l'instrumentation de bord 13 à l'instant de ladite interruption.

L'activation de l'organe à choix multiple 21 génère un ordre d'inhibition 19 de la ou des boucles d'asservissement lent 17 affectées aux modes supérieurs 16 de guidage du giravion 1, suivant l'un au moins des axes de progression T, R, V, L du giravion 1 (verticalité V pour un exemple de tenue de pente du giravion). Le dit au moins axe de progression T, R, V, L est afférent au dit au moins mode de guidage G préalablement sélectionné par le pilote du giravion 1. Le pilote peut gouverner le giravion 1 et modifier les paramètres de vol du giravion 1 sans rencontrer une éventuelle résistance qui serait potentiellement générée par le pilote automatique 9.

Les valeurs des paramètres de vol du giravion 1 suivant les autres axes de progression T, R, V, L du giravion 1 (tangage T, roulis R et lacet L pour un même exemple de tenue de pente), sont potentiellement adaptées par le pilote automatique 9 à partir des consignes de vol 11 initialement mémorisées et inchangées. Une telle adaptation est effectuée selon l'état courant de progression en vol du giravion 1, sur le fondement de la modification du comportement du giravion 1 par le pilote du giravion suivant l'axe de progression sur lequel le pilote intervient (verticalité V pour le dit exemple de tenue de pente du giravion) au moyen de l'organe manuel de commande 4.

Une interruption de l'entraînement de l'organe manuel de commande 4 par le pilote du giravion 1, génère un ordre d'acquisition 20 par le pilote automatique 9 de la ou des consignes de trajectoire C courantes évaluées au moyen de l'instrumentation de bord 13 au regard de l'état effectif de progression du giravion 1. La ou les consignes de trajectoire C faisant l'objet de l'ordre d'acquisition sont celles relevant de l'entraînement préalable de l'organe manuel de commande 4 par le pilote du giravion, les autres consignes de vol 11 étant inchangées.

La valeur courante du ou des paramètres de vol modifiés par le dit entraînement de l'organe manuel de commande 4 par le pilote du giravion 1 est acquise par le pilote automatique 9 en substitution d'une valeur initiale. Les ordres de commande générés par le pilote automatique relatifs aux autres paramètres de vol sont le cas échéant corrigés au regard de leur valeur initiale selon l'état courant de progression du giravion 1, qui évolue sur le fondement de la consigne de trajectoire C acquise correspondante à ladite valeur du ou des paramètres de vol modifiée à partir de l'émission de l'ordre d'acquisition.

Il est à considérer par valeur initiale la valeur des paramètres de vol mémorisée préalablement à l'entraînement par l'homme du ou des organes manuels de commande 4, sous réserve de l'activation du mode de tenue de trajectoire opérée à partir de l'organe à choix multiple 21. Les modalités d'acquisition de ladite valeur initiale des paramètres de vol sont indifférentes au regard de la mise en oeuvre du procédé de la présente invention. Par exemple, une dite valeur initiale est susceptible d'avoir été acquise ou modifiée par des moyens d'acquisition 40 traditionnels d'une consigne de vol équipant couramment les giravions, ou d'avoir été acquise à partir de l'activation antérieure d'un mode de guidage G.

On relèvera que selon la forme de réalisation illustrée, il est préféré de maintenir une assistance en stabilisation du giravion 1 par le pilote automatique 9 au moyen des modes de stabilisation 14, malgré une activation par le pilote du giravion 1 de la fonction de tenue de trajectoire exploitant les modes supérieurs 16. Selon une variante, une telle assistance en stabilisation est inhibée sous l'effet d'une activation par le pilote du giravion 1 de la fonction de tenue de trajectoire.

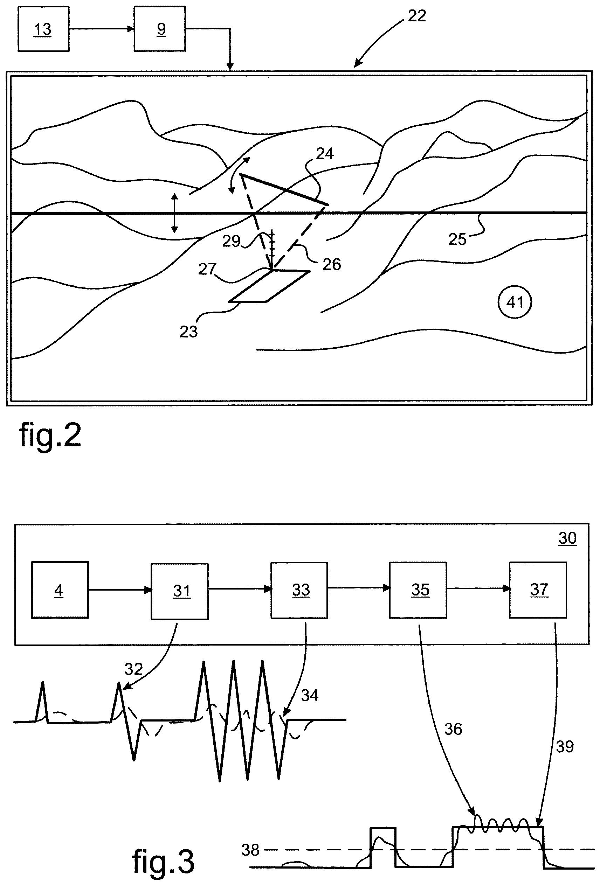

Sur la fig.2, l'assistance à la tenue de trajectoire du giravion à partir de la mise en oeuvre des différents modes de guidage, est associée à une assistance visuelle pour le pilote du giravion de la trajectoire suivie par le giravion au regard d'une zone de posé.

Il est rappelé que sans être restrictive, l'exploitation du procédé de la présente invention est particulièrement adaptée à une évolution du giravion par rapport à une zone de posé dans des conditions difficiles, tant au regard de l'hostilité de l'environnement extérieur qu'au regard des informations relatives au territoire approché susceptibles d'être incertaines.

Le pilote du giravion dispose d'un organe d'affichage 22 de l'environnement extérieur 41 du giravion 1, de préférence illustré en trois dimensions, faisant apparaître une représentation du relief environnant la zone de posé approchée 23 par le giravion 1. Une maquette 24 figurative du giravion 1 est illustrée, de préférence schématiquement tel que sous forme d'une ligne. Cette maquette 24 est animée en mobilité par le pilote automatique 9 à partir des informations fournies par l'instrumentation de bord 13. L'animation de la maquette 24 est illustrée par rapport à une ligne d'horizon 25 fixe horizontalement et mobile verticalement, et par rapport à ladite zone de posé approchée 23 illustrée sous forme d'une figure.

L'animation de la maquette 24 relève notamment d'une variation d'orientation du giravion 1 par rapport à la ligne d'horizon 25 et par rapport à la zone de posé approchée 23, telle qu'à partir d'une variation d'inclinaison en assiette latérale de la maquette 24. La ligne d'horizon 25 est maintenue fixe horizontalement, y compris en prise de virage par le giravion, mais est mobile verticalement en fonction de l'assiette longitudinale tenue par le giravion.

Un faisceau 26 projeté depuis la maquette 24 illustre la pente tenue par le giravion vis-à-vis d'une zone de posé prédictive 27 du giravion prenant en compte sa trajectoire courante. Ce faisceau 26 est associé à une illustration schématique par échelle de valeur d'un vecteur de vitesse 29 illustrant la vitesse d'approche du giravion vers la zone de posé prédictive 27.

A partir de ces indications, le pilote du giravion peut rapidement et aisément corriger la trajectoire du giravion par la mise en oeuvre de la fonction de tenue de trajectoire proposée par la présente invention.

Il est à considérer que la fonction de tenue de trajectoire est susceptible d'être exploitée tant en approche qu'en éloignement d'une zone de posé. En outre, la destination particulièrement adaptée de la fonction de tenue de trajectoire à une assistance au guidage d'un giravion évoluant par rapport à une zone de posé, ne préjuge en rien d'autres applications qui pourraient être faites de la fonction de tenue de trajectoire, y compris sous diverses conditions de vol du giravion incluant par exemple le vol de croisière.

Sur la fig.3, il est proposé de valider une mobilité d'un quelconque organe manuel de commande 4 potentiellement entraîné par l'homme pour modifier le comportement en vol du giravion, à partir d'une analyse de cette mobilité. De telles dispositions visent à éviter une mise en oeuvre de la fonction de tenue de trajectoire prenant en compte des mouvements de l'organe manuel de commande 4. qui ne seraient pas issus de son entraînement volontaire par le pilote du giravion. La validation de la pertinence d'un entraînement de l'organe manuel de commande 4 par l'homme est opérée par des moyens d'analyse 30 de cette pertinence, à partir d'une détermination de l'énergie développée pour l'entraînement en mobilité de l'organe manuel de commande 4.

Les dits moyens d'analyse 30 mettent en oeuvre des moyens de détection 31 d'un entraînement de l'organe manuel de commande 4, et sont générateurs d'un signal de détection 32 d'un tel entraînement. Une opération de lissage 33 dans le temps du signal de détection 32 est alors effectuée, et un signal de détection lissé 34 est généré.

A partir du signal de détection lissé 34, il est déterminé par calcul 35 un signal de l'énergie développée 36 pour l'entraînement de l'organe manuel de commande 4. Le signal d'énergie développée 36 est alors comparé 37 avec un seuil prédéfini 38 considéré comme significatif d'un entraînement volontaire par l'homme de l'organe manuel de commande 4. De préférence, le signal de l'énergie développée 36 est préalablement converti en un signal logique 39 significatif de l'énergie moyenne développée, à partir duquel est effectuée ladite comparaison 35.

## Revendications

1. Procédé de mise en oeuvre d'un système automatisé de commande de vol pour giravion (1), comprenant un pilote automatique (9) générateur d'ordres de commande selon des modes prédéfinis de fonctionnement, les ordres de commande provoquant une modification du comportement du giravion (1) suivant l'un au moins des axes de progression (T, R, V, L) du giravion (1) comprenant au moins le tangage (T), le roulis (R), la verticalité (V) et le lacet (L),
**caractérisé en ce que** le pilote automatique (9) intègre une fonction de tenue de trajectoire du giravion (1) comprenant au moins un mode de guidage (G) du giravion (1) par le pilote automatique (9) suivant l'un au moins des dits axes de progression (T, R, V, L) du giravion (1), selon laquelle fonction de tenue de trajectoire :
- une requête d'acquisition (18) d'au moins une consigne de trajectoire définie par au moins un paramètre de vol est émise par le pilote humain, ladite consigne de trajectoire étant relative au dit au moins un mode de guidage (G), puis
- en conséquence d'un entraînement par le pilote humain d'au moins un organe manuel de commande (4) provoquant une modification du comportement du giravion (1) suivant l'un quelconque au moins des dits axes de progression (T, R, V, L), le pilote automatique (9) est générateur :
. d'un ordre d'inhibition (19) par le pilote automatique (9) du dit au moins mode de guidage (G) du giravion (1) pour lequel la dite requête d'acquisition (18) d'une consigne de trajectoire a été émise et relatif au dit au moins un axe de progression à partir duquel le comportement du giravion est modifié par le pilote humain,
. d'un ordre d'acquisition (20) par le pilote automatique (9) de la valeur du dit au moins paramètre de vol relevant de ladite consigne de trajectoire à acquérir et relatif au dit au moins un axe de progression à partir duquel le comportement du giravion est modifié par le pilote humain, ladite valeur étant évaluée sous condition d'une interruption du dit entraînement de l'organe manuel de commande (4), et étant isolément substituée à la valeur du au moins dit paramètre de vol acquise par le pilote automatique (9) préalablement à l'ordre d'inhibition (19), les consignes de trajectoire afférentes aux autres modes de guidage (G) du giravion (1) maintenus engagés suivant les autres dits axes de progression (T, R, V, L) étant conservées en l'état préalable au dit entraînement par le pilote humain du dit au moins un organe manuel de commande, les ordres de commande générés par le pilote automatique afférents à l'ensemble des axes de progression maintenus engagés étant adaptés par le pilote automatique (9) selon l'état courant de progression du giravion (1) sur le fondement des dites consignes de trajectoire conservées et de ladite valeur substituée du dit au moins un paramètre de vol pour lequel ladite requête d'acquisition (18) a été émise.

2. Procédé selon la revendication 1 :
**caractérisé en ce que** l'ordre d'inhibition (19) du dit au moins mode de guidage (G) du giravion (1) est associé à un ordre de maintien d'un mode de base du pilote automatique (9) procurant une stabilisation (14) par amortissement en assiette du giravion (1).

3. Procédé selon l'une quelconque des revendications 1 et 2 :
**caractérisé en ce que** la requête d'acquisition (18) de la consigne de trajectoire comprend une opération de sélection par le pilote humain au moyen d'un organe de commande à choix multiples (21), d'au moins un dit mode de guidage (G) parmi l'un quelconque au moins d'une pluralité de modes de guidage (G) respectivement relatifs :
- à une tenue de vitesse de progression du giravion (1) en assiettes (T, R),
- à une tenue de vitesse de progression du giravion (1) en verticalité (V),
- à une tenue de vitesse de progression du giravion (1) en lacet (L),
- à une tenue d'orientation du giravion (1) par rapport à un cap,
- à une tenue de pente du giravion (1),
- à une tenue de position en vol stationnaire,
- à une tenue d'accélération du giravion (1) par rapport aux axes du repère géographique local,
- à une tenue d'accélération du giravion (1) par rapport aux axes de progression (T,R,V,L) du giravion (1),
- à une tenue de virage coordonné par le giravion (1),
- à une tenue de position du giravion (1) vis-à-vis d'un dérapage,
- à une tenue de vitesse air par le giravion (1),
- à une tenue d'incidence par le giravion (1),
- à une tenue d'altitude par le giravion (1),
- à une tenue de hauteur par le giravion (1),
- à une tenue de vitesse sur trajectoire par le giravion (1).

4. Procédé selon l'une quelconque des revendications 1 à 3 ;
**caractérisé en ce que** l'acquisition par le pilote automatique (9) de la dite consigne de trajectoire relative au dit ordre d'acquisition (20), est une acquisition :
- soit d'un paramètre de vol relatif à une variation de pas collectif des pales d'un rotor principal (2) du giravion (1), indifféremment selon une valeur constante ou selon une variation de valeur à maintenir, la valeur d'un paramètre de vol relatif à une variation de pas cyclique du rotor principal (2) et la valeur d'un paramètre de vol relatif à une variation de pas collectif d'un rotor anti-couple (3) du giravion (1) étant inchangées,
- soit d'un paramètre de vol relatif à une variation de pas cyclique des pales du rotor principal (2), indifféremment selon une valeur constante ou selon une variation de valeur à maintenir, la valeur d'un paramètre de vol relatif à une variation de pas collectif des pales du rotor principal (2) et la valeur d'un paramètre de vol relatif à une variation de pas collectif du rotor anti-couple (3) étant inchangées,
- soit de l'un et de l'autre des dits paramètres de vol relatifs respectivement à une variation de pas collectif et à une variation de pas cyclique des pales du rotor principal (2), indifféremment selon des valeurs constantes ou selon des variations de valeur à maintenir respectives, la valeur d'un paramètre de vol relatif à une variation de pas collectif des pales du rotor anti-couple (3) étant inchangée,
- soit d'un paramètre de vol relatif à une variation de pas collectif des pales du rotor anti-couple (3), indifféremment selon une valeur constante ou selon une variation de valeur à maintenir, la valeur d'un paramètre de vol relatif à une variation de pas cyclique du rotor principal (2) et la valeur d'un paramètre de vol relatif à une variation de pas collectif du rotor principal (2) étant inchangées.

5. Procédé selon l'une quelconque des revendications 1 à 4 :
**caractérisé en ce que** la valeur du dit au moins un paramètre de vol est évaluée selon l'état effectif de progression du giravion (1) déterminé par une instrumentation de bord (13) du giravion (1) comprenant une pluralité de moyens de mesure dont :
- des moyens de détermination d'une vitesse de progression du giravion (1) suivant l'un quelconque au moins des axes de progression par le giravion (T, R, V, L) du giravion 1, indifféremment vitesse verticale, vitesse air, vitesse indiquée et/ou vitesse sol,
- des moyens de détermination d'une pente du giravion (1),
- des moyens de mesure barométrique de l'altitude du giravion (1),
- des moyens de mesure par radiosonde de la hauteur du giravion (1),
- des moyens d'évaluation d'un écart de trajectoire horizontale (T, R) du giravion (1) par rapport à une consigne de trajectoire préalablement acquise par le pilote automatique (9),
- des moyens d'évaluation d'un écart de trajectoire verticale (V) du giravion (1),
- des moyens de détermination de la progression du giravion (1) par radionavigation,
- des moyens de capture inertiels indifféremment en accélération et/ou en vitesse angulaire du giravion (1).

6. Procédé selon l'une quelconque des revendications 1 à 5 :
**caractérisé en ce que** l'exécution de la fonction de tenue de trajectoire est associée à une opération de visualisation sur un organe d'affichage (22) de l'environnement extérieur (41) du giravion (1), d'une maquette (24) figurative du giravion (1), d'une figuration d'une zone de posé (23) du giravion (1) évoluant par rapport à cette zone de posé (23), et d'illustrations suivantes au regard du dit environnement extérieur :
- une illustration d'une variation d'orientation du giravion (1) par rapport à une ligne d'horizon (25),
- une illustration d'une variation d'orientation et de position du giravion (1) par rapport à la zone de posé (23) figurée,
- au moins une illustration d'informations prédictives de la position et de l'orientation du giravion (1) par rapport à la zone de posé (23) figurée, les dites informations prédictives étant issues d'une projection de l'évolution de la position et de l'orientation du giravion (1) à partir d'au moins une consigne de trajectoire courante.

7. Procédé selon la revendication 6,
**caractérisé en ce que** l'opération d'affichage est réalisée indifféremment au moyen d'un viseur tête haute, d'un viseur tête moyenne ou d'un viseur tête basse.

8. Procédé selon l'une quelconque des revendications 6 et 7,
**caractérisé en ce que** la visualisation de l'environnement extérieur du giravion (1) est une représentation du monde extérieur au giravion (1) en images à trois dimensions.

9. Procédé selon l'une quelconque des revendications 6 à 8,
**caractérisé en ce que** l'illustration d'une variation d'orientation du giravion (1) par rapport à la ligne d'horizon (25) est une animation de la maquette (24) du giravion (1) inclinée en assiette latérale par rapport à la ligne d'horizon (25) figurée fixe horizontalement et mobile verticalement.

10. Procédé selon l'une quelconque des revendications 1 à 9 :
**caractérisé en ce que** la mise en oeuvre de la fonction de tenue de trajectoire est placée sous la dépendance d'une opération do détermination par calcul de la pertinence d'un entraînement du au moins dit organe manuel de commande (4), à partir d'un traitement par calcul d'un signal de détection (32) d'un tel entraînement.

11. Procédé selon la revendication 10,
**caractérisé en ce que** le traitement par calcul du signal de détection (32) comprend l'opération de lissage (33) dans le temps du signal de détection (32), de détermination (35) à partir du signal de détection lissé (34) de l'énergie développée (36) pour générer l'entraînement de l'organe manuel de commande (4), et par comparaison de ladite énergie développée (36) préalablement déterminée avec un seuil prédéfini (38) considéré comme significatif d'un entraînement volontaire par le pilote humain de l'organe manuel de commande (4).

## Patentansprüche

1. Verfahren zur Anwendung eines automatisierten Flugsteuerungssystems (1) für ein Drehflügelflugzeug, mit einem Autopiloten (9), der Steuerbefehle gemäß vordefinierten Betriebsmodi erzeugt, wobei die Steuerbefehle eine Veränderung des Verhaltens des Drehflügelflugzeugs (1) bewirken entlang mindestens einer von Vortriebsachsen (T, R, V, L) des Drehflügelflugzeugs (1), die mindestens das Nicken (T), das Rollen (R), die senkrechte Richtung (V) und das Gieren (L) umfassen,
dadurch gekenntzeichnet, dass der Autopilot (9) eine Funktion der Beibehaltung der Flugbahn des Drehflügelflugzeugs (1) umfasst, mit mindestens einem Führungsmodus (G) des Drehflügelflugzeugs (1) durch den Autopiloten (9) entlang mindestens einer der Vortriebsachsen (T, R, V, L) des Drehflügelflugzeugs (1), wobei gemäß der Funktion der Beibehaltung der Flugbahn:
- von dem menschlichen Piloten eine Anforderung (18) mindestens eines Sollwerts der Flugbahn, die durch mindestens einen Flugparameter definiert ist, ausgegeben wird, wobei der Flugbahn-Sollwert sich auf den mindestens einen Führungsmodus (G) bezieht, und dann
- der Autopilot (9) infolge einer Betätigung mindestens eines manuellen Steuerelements (4) durch den menschlichen Piloten, was zu einer Änderung des Verhaltens des Drehflügelflugzeugs (1) entlang mindestens einer beliebigen der Vortriebsachsen (T, R, V, L) führt, erzeugt:
• einen Blockierbefehl (19) durch den Autopiloten (9) des mindestens einen Führungsmodus (G) des Drehflügelflugzeugs (1), für den die Anforderung (18) eines Flugbahn-Sollwertes ausgegeben wurde, und bezüglich der mindestens einen Vortriebsachse, ausgehend von der das Verhalten des Drehflügelflugzeugs durch den menschlichen Piloten verändert wird,
• eine Anforderung (20) durch den Autopiloten (9) des Wertes des mindestens einen Flugparameters, der sich aus dem zu beschaffenden Flugbahn-Sollwert ergibt, und bezüglich der mindestens einen Vortriebsachse, ausgehend von der das Verhalten des Drehflügelflugzeugs durch den menschlichen Piloten verändert wird, wobei der Wert ermittelt wird unter der Bedingung einer Unterbrechung der Betätigung des manuellen Steuerelements (4), und der einzeln den Wert des mindestens einen durch den Autopiloten (9) vor dem Blockierbefehl (19) beschafften Flugparameter ersetzt, wobei die Flugbahn-Sollwerte, die zu anderen Führungsmodi (G) des Drehflügelflugzeugs (1) gehören, die entlang der anderen Vortriebsachsen (T, R, V, L) beibehalten wurden, auf dem Stand vor der Betätigung des manuellen Steuerelements durch den menschlichen Piloten gehalten werden, wobei die von dem Autopiloten erzeugten Steuerbefehle, die zu der Gesamtheit der beibehaltenen Vortriebsachsen gehören, von dem Autopiloten (9) gemäß dem aktuellen Vortriebszustand des Drehflügelflugzeugs angepasst werden auf der Grundlage der beibehaltenen Flugbahn-Sollwerte und des ersetzten Wertes des mindestens einen Flugparameters, für den die Anforderung (18) ausgegeben wurde.

2. Verfahren nach Anspruch 1,
**dadurch gekennzeichnet, dass** der Blockierbefehl (19) des mindestens einen Führungsmodus (G) des Drehflügelflugzeugs (1) mit einem Befehl der Beibehaltung eines Basismodus des Autopiloten (9) verbunden ist, der eine Stabilisierung (14) durch Dämpfung der Nickbewegung des Drehflügelflugzeugs (1) bewirkt.

3. Verfahren nach einem der Ansprüche 1 und 2,
**dadurch gekennzeichnet, dass** die Anforderung (18) des Flugbahn-Sollwertes einen Schritt der Auswahl durch den menschlichen Piloten mit Hilfe eines Multiple-Choice-Steuerelements (21) mindestens eines beliebigen Führungsmodus (G) aus einer Mehrzahl von Führungsmodi (G) aufweist, die sich jeweils beziehen auf:
- eine Beibehaltung der Vortriebsgeschwindigkeit des Drehflügelflugzeugs (1) bei Nickbewegungen (T, R),
- eine Beibehaltung der Vortriebsgeschwindigkeit des Drehflügelflugzeugs (1) in senkrechter Richtung (V),
- eine Beibehaltung der Vortriebsgeschwindigkeit des Drehflügelflugzeugs (1) bei einer Gierbewegung (L),
- eine Beibehaltung der Ausrichtung des Drehflügelflugzeugs (1) relativ zu einem Kurs,
- eine Beibehaltung des Neigungswinkels des Drehflügelflugzeugs (1),
- eine Beibehaltung der Position im Schwebeflug,
- eine Beibehaltung der Beschleunigung des Drehflügelflugzeugs (1) relativ zu den lokalen geographischen Bezugsachsen,
- eine Beibehaltung der Beschleunigung des Drehflügelflugzeugs (1) relativ zu den Vortriebsachsen (T, R, V, L) des Drehflügelflugzeugs (1),
- eine Beibehaltung der Kurvenflugkoordination des Drehflügelflugzeugs (1),
- eine Beibehaltung der Position des Drehflügelflugzeugs gegenüber einem Abgleiten,
- eine Beibehaltung der Fluggeschwindigkeit des Drehflügelflugzeugs (1),
- eine Beibehaltung des Anstellwinkels durch das Drehflügelflugzeug (1),
- eine Beibehaltung der Flughöhe (über n.N.) des Drehflügelflugzeugs (1),
- eine Beibehaltung der Flughöhe (über Grund) des Drehflügelflugzeugs (1), und
- eine Beibehaltung der Geschwindigkeit des Drehflügelflugzeugs (1) auf der Flugbahn.

4. Verfahren nach einem der Ansprüche 1 bis 3,
**dadurch gekennzeichnet, dass** die Beschaffung des Flugbahn-Sollwertes durch den Autopiloten (9) aufgrund der Anforderung (20) eine Beschaffung ist:
- entweder eines Flugparameters bezüglich einer Änderung des kollektiven Verstellwinkels der Rotorblätter eines Hauptrotors (2) des Drehflügelflugzeugs (1) mit einem konstanten Wert oder einer Veränderung des zu behaltenden Wertes, wobei der Wert eines Flugparameters bezüglich einer Änderung des Rotorblattverstellwinkels des Hauptrotors (2) und der Wert eines Flugparameters bezüglich einer Änderung des kollektiven Rotorblattverstellwinkels eines Heckrotors (3) des Drehflügelflugzeugs (1) unverändert bleiben,
- oder eines Flugparameters bezüglich einer Änderung des periodischen Verstellwinkels der Rotorblätter des Hauptrotors (2) gemäß einem konstanten Wert oder einer Änderung des beizubehaltenden Wertes, wobei der Wert eines Flugparameters relativ zu einer Änderung des kollektiven Verstellwinkels der Rotorblätter des Hauptrotors (2) und der Wert eines Flugparameters relativ zu einer Änderung des kollektiven Rotorblattverstellwinkels des Heckrotors (3) unverändert bleiben,
- oder des einen oder des anderen der Flugparameter bezüglich jeweils einer Änderung des kollektiven Rotorblattverstellwinkels und einer Änderung des periodischen Rotorblattverstellwinkels des Hauptrotors (2) gemäß konstanten Werten oder gemäß jeweiligen Änderungen des beizubehaltenden Wertes, wobei der Wert eines Flugparameters bezüglich einer Änderung des kollektiven Verstellwinkels der Rotorblätter des Heckrotors (3) unverändert bleibt,
- oder eines Flugparameters bezüglich einer Änderung des kollektiven Verstellwinkels der Rotorblätter des Heckrotors (3) gemäß einem konstanten Wert oder gemäß einer Änderung des beizubehaltenden Wertes, wobei der Wert eines Flugparameters bezüglich einer Änderung des periodischen Rotorblattverstellwinkels des Hauptrotors (2) und der Wert eines Flugparameters bezüglich einer Änderung des kollektiven Rotorblattverstellwinkels des Hauptrotors (2) unverändert bleiben.

5. Verfahren nach einem der Ansprüche 1 bis 4,
**dadurch gekennzeichnet, dass** der Wert des mindestens einen Flugparameters berechnet wird gemäß dem effektiven Vortriebszustand des Drehflügelflugzeugs (1), der durch eine Bordinstrumentierung (13) des Drehflügelflugzeugs (1) bestimmt wird, die eine Mehrzahl von Messinstrumenten umfasst, darunter:
- Mittel zur Bestimmung einer Vortriebsgeschwindigkeit des Drehflügelflugzeugs (1) entlang mindestens einer beliebigen Vortriebsachse (T, R, V, L) des Drehflügelflugzeugs (1), wie die Geschwindigkeit in senkrechter Richtung, die Fluggeschwindigkeit, die angegebene Geschwindigkeit und/oder die Geschwindigkeit über dem Boden,
- Mittel zur Bestimmung einer Neigung des Drehflügelflugzeugs (1),
- Mittel zur barometrischen Messung der Höhe des Drehflügelflugzeugs (1),
- Mittel zur Messung der Höhe des Drehflügelflugzeugs (1) durch eine Radiosonde,
- Mittel zur Berechnung einer Abweichung der horizontalen Flugbahn (T, R) des Drehflügelflugzeugs (1) von einer Soll-Flugbahn, die vorher von dem Autopiloten (9) beschafft wurde,
- Mittel zur Berechnung einer Abweichung der senkrechten Flugbahn (V) des Drehflügelflugzeugs (1),
- Mittel zur Bestimmung des Vortriebs des Drehflügelflugzeugs (1) durch Funknavigation und
- Trägheitssensormittel zur Messung einer Beschleunigung und/oder einer Winkelgeschwindigkeit des Drehflügelflugzeugs (1).

6. Verfahren nach einem der Ansprüche 1 bis 5,
**dadurch gekennzeichnet, dass** die Ausführung der Funktion der Beibehaltung der Flugbahn mit einem Schritt der Anzeige auf einem Anzeigeelement (22) der äußeren Umgebung (41) des Drehflügelflugzeugs, eines bildlichen Modells (24) des Drehflügelflugzeugs, einer bildlichen Darstellung eines Landeplatzes (23) des Drehflügelflugzeugs, die sich in Beziehung zu diesem Landeplatz (23) weiterentwickelt, und der folgenden Darstellungen bezüglich der äußeren Umgebung, verbunden ist:
- einer Darstellung einer Änderung der Ausrichtung des Drehflügelflugzeugs (1) bezüglich einer Horizontlinie (25),
- einer Darstellung einer Änderung der Ausrichtung und der Position des Drehflügelflugzeugs (1) bezüglich des dargestellten Landeplatzes (23),
- mindestens einer Darstellung von Vorhersageinformationen der Position und der Ausrichtung des Drehflügelflugzeugs (1) bezüglich des dargestellten Landeplatzes (23), wobei die Vorhersageinformationen aus einer Projektion der Entwicklung der Position und der Ausrichtung des Drehflügelflugzeugs ausgehend von mindestens einem aktuellen Flugbahn-Sollwert hervorgehen.

7. Verfahren nach Anspruch 6,
**dadurch gekennzeichnet, dass** der Anzeigeschritt ausgeführt wird mit einer Anzeige auf Augenhöhe, einer Anzeige auf mittlerer Höhe oder einer Anzeige auf niedriger Höhe.

8. Verfahren nach einem der Ansprüche 6 und 7,
**dadurch gekennzeichnet, dass** die Anzeige der äußeren Umgebung des Drehflügelflugzeugs eine Darstellung der Außenwelt des Drehflügelflugzeugs (1) in dreidimensionalen Bildern ist.

9. Verfahren nach einem der Ansprüche 6 bis 8,
**dadurch gekennzeichnet, dass** die Darstellung einer Änderung der Ausrichtung des Drehflügelflugzeugs bezüglich der Horizontlinie (25) eine Animation des Modells (24) des Drehflügelflugzeugs (1) ist, die bezüglich der Horizontlinie (25) seitlich gekippt ist, die horizontal fest und in senkrechter Richtung beweglich dargestellt ist.

10. Verfahren nach einem der Ansprüche 1 bis 9,
**dadurch gekennzeichnet, dass** die Durchführung der Funktion des Beibehaltens der Flugbahn von einem Schritt der Bestimmung der Relevanz einer Betätigung des mindestens einen manuellen Steuerelements (4) abhängig gemacht wird, ausgehend von der Behandlung eines Erfassungssignals (32) einer solchen Betätigung durch Berechnung.

11. Verfahren nach Anspruch 10,
**dadurch gekennzeichnet, dass** die Behandlung des Erfassungssignals (32) durch Berechnung und durch Vergleich der zuvor bestimmten entwickelten Energie (36) mit einem vordefinierten Schwellenwert (38), der als signifikativ für eine bewusste Betätigung durch den menschlichen Piloten des manuellen Steuerelements (4) angesehen wird, den Schritt eines zeitlichen Glättens (33) des Erfassungssignals (32), der Bestimmung (35) der entwickelten Energie (36), um ausgehend von dem geglätteten Erfassungssignal das manuelle Steuerelement (4) zu betätigen, umfasst.

## Claims

1. A method of implementing an automated flight control system for a rotorcraft (1), comprising an autopilot (9) which generates control commands in accordance with predefined operating modes, the control commands bringing about a modification of the behaviour of the rotorcraft (1) along one at least of the progress axes (T, R, V, L) of the rotorcraft (1) comprising at least pitch (T), roll (R), verticality (V) and yaw (L), **characterised in that** the autopilot (9) incorporates a function of maintaining the path of the rotorcraft (1) comprising at least one guidance mode (G) for guidance of the rotorcraft (1) by the autopilot (9) along one at least of said progress axes (T, R, V, L) of the rotorcraft (1), according to which path-maintaining function:
- an acquisition request (18) for acquiring at least one path setpoint defined by at least one flight parameter is issued by the human pilot, said path setpoint relating to said at least one guidance mode (G), then
- as a result of the human pilot driving at least one manual control member (4) bringing about a modification of the behaviour of the rotorcraft (1) along any one at least of said progress axes (T, R, V, L), the autopilot (9) generates:
. an inhibit command (19) for inhibition by the autopilot (9) of said at least one guidance mode (G) of the rotorcraft (1) for which said acquisition request (18) for acquiring a path setpoint was issued and relating to said at least one progress axis based on which the behaviour of the rotorcraft is modified by the human pilot,
. an acquisition command (20) for acquisition by the autopilot (9) of the value of said at least one flight parameter relating to said path setpoint to be acquired and relating to said at least one progress axis based on which the behaviour of the rotorcraft is modified by the human pilot, said value being evaluated on the condition that said driving of the manual control member (4) is interrupted, and being substituted in isolation for the value of the at least one said flight parameter acquired by the autopilot (9) prior to the inhibit command (19), the path setpoints relating to the other guidance modes (G) of the rotorcraft (1) which are kept engaged along the other said progress axes (T, R, V, L) being conserved in the state prior to said driving by the human pilot of said at least one manual control member, the control commands generated by the autopilot relating to all the progress axes which are kept engaged being adapted by the autopilot (9) according to the current state of progress of the rotorcraft (1) on the basis of said conserved path setpoints and said substituted value of said at least one flight parameter for which said acquisition request (18) was issued.

2. A method according to Claim 1,
**characterised in that** the inhibit command (19) for inhibiting said at least one guidance mode (G) of the rotorcraft (1) is associated with a command for maintaining a basic mode of the autopilot (9) providing stabilisation (14) by damping the attitude of the rotorcraft (1).

3. A method according to any one of Claims 1 and 2,
**characterised in that** the acquisition request (18) for acquiring the path setpoint comprises an operation of selection by the human pilot, by means of a multiple-choice control member (21), of at least one said guidance mode (G) from among any one at least of a plurality of guidance modes (G) relating respectively to:
- maintaining the forward speed of the rotorcraft (1) in attitude (T, R),
- maintaining the forward speed of the rotorcraft (1) in verticality (V),
- maintaining the forward speed of the rotorcraft (1) in yaw (L),
- maintaining the orientation of the rotorcraft (1) relative to a heading,
- maintaining the slope of the rotorcraft (1),
- maintaining position in hovering flight,
- maintaining the acceleration of the rotorcraft (1) relative to the axes of the local geographical reference point,
- maintaining the acceleration of the rotorcraft (1) relative to the progress axes (T, R, V, L) of the rotorcraft (1),
- maintaining of a coordinated turn by the rotorcraft (1),
- maintaining the position of the rotorcraft (1) with respect to sideslip,
- maintaining of the airspeed by the rotorcraft (1),
- maintaining of an angle of incidence by the rotorcraft (1),
- maintaining of an altitude by the rotorcraft (1),
- maintaining of a height by the rotorcraft (1),
- maintaining of the speed along its path by the rotorcraft (1).

4. A method according to any one of Claims 1 to 3,
**characterised in that** the acquisition by the autopilot (9) of said path setpoint relating to said acquisition command (20) is an acquisition:
- either of a flight parameter relating to a variation in the collective pitch of the blades of a main rotor (2) of the rotorcraft (1), either in accordance with a constant value or in accordance with a variation in value to be maintained, the value of a flight parameter relating to a variation in the cyclic pitch of the main rotor (2) and the value of a flight parameter relating to a variation in the collective pitch of a tail rotor (3) of the rotorcraft (1) being unchanged,
- or of a flight parameter relating to a variation in the cyclic pitch of the blades of the main rotor (2), either in accordance with a constant value or in accordance with a variation in value to be maintained, the value of a flight parameter relating to a variation in the collective pitch of the blades of the main rotor (2) and the value of a flight parameter relating to a variation in the collective pitch of the tail rotor (3) being unchanged,
- or of one and the other of said flight parameters relating to a variation in the collective pitch and to a variation in the cyclic pitch of the blades of the main rotor (2) respectively, either in accordance with constant values or in accordance with respective variations in value to be maintained, the value of a flight parameter relating to a variation in the collective pitch of the blades of the tail rotor (3) being unchanged,
- or of a flight parameter relating to a variation in the collective pitch of the blades of the tail rotor (3), either in accordance with a constant value or in accordance with a variation in value to be maintained, the value of a flight parameter relating to a variation in the cyclic pitch of the main rotor (2) and the value of a flight parameter relating to a variation in the collective pitch of the main rotor (2) being unchanged.

5. A method according to any one of Claims 1 to 4,
**characterised in that** the value of the said at least one flight parameter is evaluated depending on the actual state of progress of the rotorcraft (1) determined by onboard instrumentation (13) of the rotorcraft (1) comprising a plurality of measurement means including:
- means for determining a forward speed of the rotorcraft (1) along any one at least of the progress axes by the rotorcraft (T, R, V, L) of the rotorcraft (1), either vertical speed, airspeed, indicated speed and/or ground speed,
- means for determining a slope of the rotorcraft (1),
- barometric measurement means for measuring the altitude of the rotorcraft (1),
- radiosonde measurement means for measuring the height of the rotorcraft (1),
- evaluation means for evaluating a deviation from the horizontal path (T, R) of the rotorcraft (1) relative to a path setpoint previously acquired by the autopilot (9),
- evaluation means for evaluating a deviation from the vertical path (V) of the rotorcraft (1),
- means for determining the progress of the rotorcraft (1) by radio navigation,
- inertial sensor means either for acceleration and/or for angular velocity of the rotorcraft (1).

6. A method according to any one of Claims 1 to 5,
**characterised in that** the execution of the path-maintaining function is associated with an operation of visualising on a display member (22) the environment (41) outside the rotorcraft (1), a model (24) representing the rotorcraft (1), a representation of a landing zone (23) for the rotorcraft (1) moving relative to this landing zone (23), and the following illustrations in relation to said external environment:
- an illustration of a variation in the orientation of the rotorcraft (1) relative to a horizon line (25),
- an illustration of a variation in the orientation and the position of the rotorcraft (1) relative to the landing zone (23) represented,
- at least one illustration of predictive information predicting the position and the orientation of the rotorcraft (1) relative to the landing zone (23) represented, said predictive information resulting from a projection of the change in the position and the orientation of the rotorcraft (1) based on at least one current path setpoint.

7. A method according to Claim 6,
**characterised in that** the display operation is effected either by means of a head-up display, an in-between display or a head-down display.

8. A method according to any one of Claims 6 and 7,
**characterised in that** the visualisation of the environment outside the rotorcraft (1) is a representation of the world outside the rotorcraft (1) as three-dimensional images.

9. A method according to any one of Claims 6 to 8,
**characterised in that** the illustration of a variation in the orientation of the rotorcraft (1) relative to the horizon line (25) is an animation of the model (24) of the rotorcraft (1) inclined in a lateral attitude relative to the horizon line (25) which is represented as being stationary horizontally and movable vertically.

10. A method according to any one of Claims 1 to 9,
**characterised in that** the implementation of the path-maintaining function is placed under the control of an operation to determine by calculation the pertinence of driving the at least one said manual control member (4), based on processing by calculation of a detection signal (32) detecting such driving.

11. A method according to Claim 10,
**characterised in that** the processing by calculation of the detection signal (32) comprises the operation (33) of smoothing the detection signal (32) over time, determining (35) from the smoothed detection signal (34) the energy developed (36) to cause the manual control member (4) to be driven, and by comparaison of said developed energy (36) previously determined with a predefined threshold (38) considered as representing intentional driving by the human pilot of the manual control member (4).
